Europäisches Patentamt

European Patent Office

Office européen des brevets

(19)

(11) Veröffentlichungsnummer: **0 225 622**
**B1**

(12) **EUROPÄISCHE PATENTSCHRIFT**

(45) Veröffentlichungstag der Patentschrift: 26.09.90

(51) Int. Cl.⁵: **F 16 B 39/10,** F 16 B 39/00

(21) Anmeldenummer: **86117027.2**

(22) Anmeldetag: **08.12.86**

(54) Vorrichtung zum Sichern von Schraubenbolzen gegen Drehung.

(30) Priorität: **11.12.85 DE 8534790 u**

(43) Veröffentlichungstag der Anmeldung:
**16.06.87 Patentblatt 87/25**

(45) Bekanntmachung des Hinweises auf die
Patenterteilung:
**26.09.90 Patentblatt 90/39**

(84) Benannte Vertragsstaaten:
**DE FR GB IT SE**

(56) Entgegenhaltungen:
**DE-A-2 519 695**
**DE-A-3 309 884**
**DE-C- 351 418**
**FR-A-2 374 547**

(73) Patentinhaber: **Wirth Maschinen- und
Bohrgeräte-Fabrik GmbH
Kölner Strasse 71-78
D-5140 Erkelenz (DE)**

(72) Erfinder: **Ecker, Karl-Heinz
Wilhelmstrasse 38
D-5140 Erkelenz (DE)**
Erfinder: **Henschenmacher, Helmut
Schwarzer Weg 26
D-5142 Brachelen (DE)**

(74) Vertreter: **Koscholke, Gotthold, Dr.-Ing.
Rheinallee 147
D-4000 Düsseldorf 11 (DE)**

**Beschreibung**

Die Erfindung bezieht sich auf eine Vorrichtung zum Verhindern eines unerwünschten Drehens von an ihren Enden mit Schlüsselangriffsflächen versehenen Schraubenbolzen oder dergleichen, insbesondere für große Schraubenbolzen, mit einem für sich auf das Ende des Schraubenbolzens aufsetzbaren Adapter, der den Schlüsselangriffsflächen des Schraubenbolzens angepaßte Gegenflächen sowie eine Außenverzahnung aufweist, und mit einer Hülse Mitnehmer, die eine mit der Außenverzahnung des Adapters durch Zusammenschieben beider Teile zum Eingriff bringbare Innenverzahnung hat.

Es gibt Fälle, in denen auf einen Schraubenbolzen mittelbar oder unmittelbar Momente wirken, die den Schraubenbolzen zu drehen suchen, obgleich dies unerwünscht ist. Dies gilt insbesondere für nach art von Stiftschrauben ausgebildete Schraubenbolzen, die in Aufnahmengewinde in einem Grundkörper eingeschraubt sind. Soll eine auf dem Schraubenbolzen befindliche Mutter abgeschraubt werden, so kann es vorkommen, daß diese festsitzt und dadurch den Schraubenbolzen mitzunehmen sucht. Solche Probleme bestehen u.a. bei großen Schraubenbolzen, wie etwa für Deckelverschlüsse von Druckbehältern u.dgl.

Es ist eine Sicherung für einzelne Sechskantschrauben bekannt (DE—A—3 309 884), bei der ein den Sechskantkopf der Schraube wie eine Haube umschließendes Kupplungsstück vorhanden ist, das an seinem Außenumfang eine Kerbverzahnung aufweist. Dieser entspricht eine Kerbverzahnung am Innenumfang des oberen Teiles einer Hülse, die bei der Herstellung der Schraubenverbindung zuerst montiert werden muß und sich dabei in die Bohrung der miteinander zu verbindenden Teile hinein erstreckt, wobei sie einen Durchlaß für die Schraube aufweist. An der Unterseite des oberen Teiles des Hülse befinden sich sog. Sperrelemente, die in eine korrespondierende Prägung an der Außenseite des zu verspannenden Teiles eingreifen sollen, wenn die Scraube angezogen wird, wodurch auch die Hülse festgespannt wird. Das Kupplungsstück wird beim Aufsetzen auf den Schraubenkopf zugleich in den oberen Teil der festgelegten Hülse hineingeschoben. Hierbei kommen die einander zugeordneten Kerbverzahnungen an diesen Teilen zum Eingriff. Mit einer solchen Vorrichtung kann nur eine Schraube gesichert werden; die Fig. 7 des erwähnten Dokuments Leigt dazu noch eine Sicherung für eine Mutter an einem Vorsprung des verspannten Teils, die für mehrere Bolzen zu verwenden wäre, wenn der zu verspannende Teil eine entsprechende durchgehende Anlagefläche hat. Außerdem ist dabei Voraussetzung, daß eine Auflage für den Kopfteil der Hülse vorhanden ist, nämlich die Außenseite eines mit der Schraube zu befestigenden Teiles.

Auch bei einer anderen bekannten Sicherungsvorrichtung für Schrauben (DE—A—2 519 695), mit der zwei oder mehr Schrauben, z.B. für die Befestigung von Fahrzeugrädern, gleichzeitig gesichert werden können, wird ein Teil der Vorrichtung zwischen einer Auflagefläche an einem zu befestigenden Teil und dem Schraubenkopf oder einer Mutter eingespannt. Es handelt sich dabei um die jeweils mit einer Durchtrittsbohrung versehenen beiden Enden einer Haltelasche. Nachdem die Schrauben unter Einspannung dieser Enden angezogen sind, werden auf die Schraubenköpfe mit einem Zwölfkant-Innenprofil versehene Sicherungsköpfe aufgesetzt, die durch einen Steg miteinander verbunden sind. Stifte an der Haltelasche gehen durch Öffnungen im Sicherungssteg hindurch und weisen Querbohrung auf, durch die Splinte gesteckt werden können.

Aufgabe der Erfindung ist es, eine praktische, leicht zu handhabende und einfache Vorrichtung zu schaffen, mit der sich ein unerwünschtes Drehen von wenigstens zwei Schrauenbolzen, insbesondere schweren Schraubenbolzen, verhindern läßt, ohne daß dazu eine Einspannung von Teilen zwischen einem Schraubenbolzen und einem zu befestigenden oder zu verspannenden Teil erfolgen mußt. Weitere Probleme, mit denen sich die Erfindung befaßt, ergeben sich aus der jeweiligen Erläuterung der aufgezeigten Lösung.

Die erfindungsgemäße Vorrichtung kennzeichnet sich durch Hülsen (Mitnehmer) die dazugehörigen Adapter aufgeschoben sind und durch einen Halter, in dem wenigstens zwei Mitnehmer (Hülsen) in einem dem Achsabstand der Schraubenbolzen entsprechenden Mittenabstand mit geringer Winkelbeweglichkeit um ihre Längsachse aufgenommen sind.

Durch eine solche Vorrichtung lassen sich mehrere Schraubenbolzen sehr einfach gegen ein unerwünschtes Drehen sichern. Ein an einem Schraubenbolzen auftretendes, ihn zu drehen suchendes Moment wird durch die vom Halter gebildete Drehmomentstütze sicher aufgenommen. Je nach dem Bedarfsfall und den bestehenden Forderungen kann eine solche Vorrichtung ständig an ihrem Platz verbleiben und dann praktisch Bestandteil einer entsprechenden Anordnung oder Einrichtung sein, oder die Vorrichtung kann nur im Bedarfsfall und so lange zum Einsatz kommen, wie es für die jeweils durchzuführende Operation, etwa das Abschrauben einer Mutter, erforderlich ist.

Bei einer vorteilhaften Ausführung erstrecken sich die Mitnehmer jeweils durch eine Öffnung des Halters hindurch, wobei in diesem Bereich Anschläge zur Begrenzung der Winkelbeweglichkeit vorhanden sind. Die Anschläge können insbesondere durch Innenflächen der Öffnung selbst gebildet sein. Zweckmäßig hat die Öffnung die Form eines Vielecks, wobei dann der Mitnehmer oder ein Ansatz desselben eine entsprechende Form mit etwas kleineren Abmessungen hat.

In weiterer Ausgestaltung der Vorrichtung sind elastische Zentrierelemente vorhanden, die den Mitnehmer relativ zum Halter in einer Ruhe- oder Ausgangsposition halten. Solche Zentrierelemente können verschiedenartig ausgebildet sein. Bei einer zweckmäßigen Ausführung sind federbelastete Druckstücke am oder im Mitnehmer vorgesehen, die an Innenflächen des Halters anliegen.

Vorteilhaft sind die Adapter unmittelbar oder mittelbar an den Halter anschließbar oder mit diesem kuppelbar, derart, daß sie zusammen mit dem Halter und den Mitnehmern transportiert werden können, insbesondere beim Abnehmen der Vorrichtung.

Weitere vorteilhafte Ausgestaltungen der Vorrichtung sind im übrigen in den Unteransprüchen angegeben.

Einzelheiten, Merkmale und Vorteile der Erfindung ergeben sich weiterhin aus der nachfolgenden Erläuterung von Ausführungsbeispielen, aus der zugehörigen Zeichnung und aus den Ansprüchen.

Es zeigen:

Fig. 1 eine Ausführung der Vorrichtung im Schnitt nach der Linie I—I in Fig. 2,

Fig. 2 eine Draufsicht auf die Vorrichtung,

Fig. 3 einen Schnitt nach der Linie III—III in Fig. 1,

Fig. 4 einen Schnitt durch einen Adapter nach der Linie IV—IV in Fig. 1 und

Fig. 5 eine Unteransicht eines Mitnehmers mit Blick in Richtung des Pfeiles V in Fig. 1.

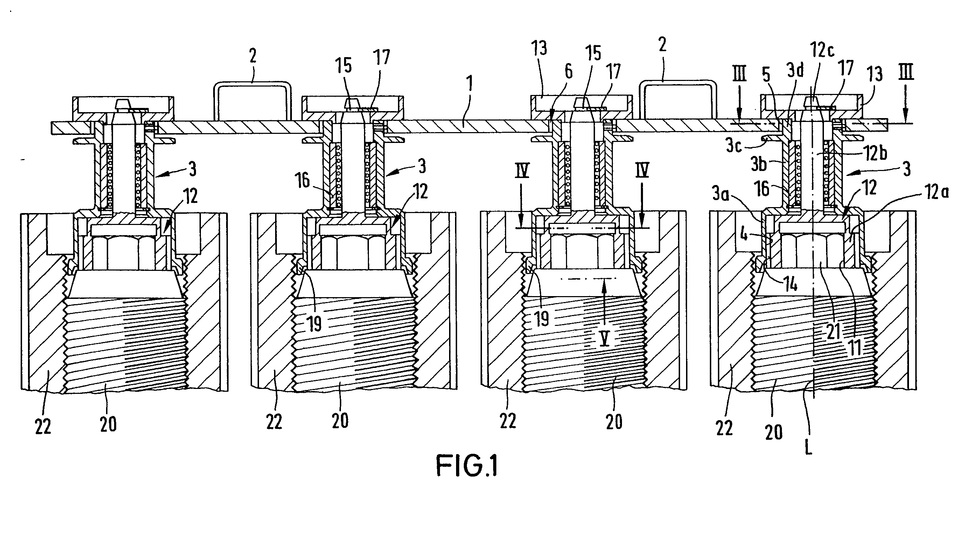

Die Fig. 1 veranschaulicht einen besonders wichtigen Einsatzfall der Vorrichtung, und zwar bei Schraubenbolzen, Dehnschrauben, Zugankern od.dgl., wie sie bei Deckelverschlüssen oder Flanschverbindungen für Reaktorgefäße, Druckbehälter und bei sonstigen hochbelastbaren Verbindungen benutzt werden, insbesondere nach Art von Stehbolzen, die mit ihrem unteren Ende in ein Aufnahmegewinde eines Grundkörpers eingeschraubt werden und durch Löcher in einem Deckel, Flansch od.dgl. hindurchgehen. Dabei wird eine Befestigungsmutter auf ein entsprechendes Gewinde des Bolzens aufgeschraubt, die sich gegen den Deckel, Flansch od.dgl. legt. Derartige Schraubenbolzen werden meist mit einer besonderen Vorrichtung vorgespannt, d.h. mit einer bestimmten Zugkraft gedehnt, ehe die Befestitungsmutter endgültig angedreht wird. Nach dem Wegnehmen der axialen Zugkraft bleibt eine Spannung bestehen, so daß die Befestigungsmutter nicht nur satt am Deckel, Flansch od.dgl. anliegt, sondern den letzteren fest gegen seine Auflage preßt.

In Fig. 1 sind jeweils die oberen Teile von Schraubenbolzen 20 der vorstehend angesprochenen Art erkennbar, die mit ihren unteren Enden in einen nicht dargestellten Grundkörper, z.B. ein Reaktorgefäß, eingeschraubt sind. Sie weisen am oberen Ende Schlüsselangriffsflächen auf, hier in Form eines Außensechskants 21. Mit der Ziffer 22 ist jeweils eine auf ein oberes Gewinde des Schraubenbolzens 20 aufgeschraubte Mutter bezeichnet, die als Anlage für eine darunter befindliche, z.B. hydraulische Spann- oder Dehnvorrichtung dient. Diese kann einen oder mehrere in Zylindern nach oben verschiebbare Kolben enthalten, wobei der oberste Kolben auf die Anlagemutter 22 wirkt.

Wenn die Schraubenspannvorrichtung nach dem Fertigstellen der Verbindung mit dem endgültigen Andrehen der nicht gezeigten Befestigungsmuttern von dem Deckel od.dgl. abgenommen werden soll, müssen zuerts die oberen Anlagemuttern 22 von den Bolzen 20 abgeschraubt werden. Dabei kann es vorkommen, daß die Mutter noch fest sitzt und sich deshalb nicht auf dem Bolzen dreht, sondern daß in unerwünschter Weise der Bolzen zusammen mit der Mutter unter der Wirkung eines auf die letztere aufgebrachten Drehmoments gedreht wird.

Um dies zu verhindern, wird die nachstehend im einzelnen erläuterte Vorrichtung benutzt.

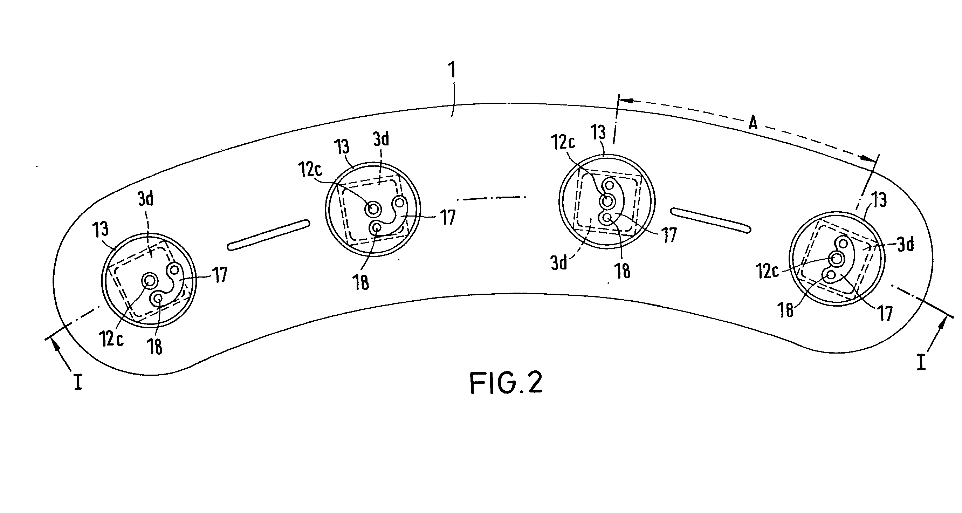

Ein plattenförmiger Halter 1 mit Traggriffen 2 ist bei der wiedergegebenen vorteilhaften Ausführung mit vier hülsenartigen Mitnehmern 3 ausgestattet. Der Mittenabstand A der Mitnehmer 3 ist gleich dem Achsabstand der Schraubenbolzen 20 voneinander. Weil die Schraubenbolzen im angenommenen Fall auf einem Lochkreis angeordnet sind, befinden sich auch die Mitnehmer 3 an entsprechenden Stellen eines Kreisbogens im Halters. Der letztere kann in seiner äußeren Form dann auch gekrümmt sein, wie Fig. 2 zeigt.

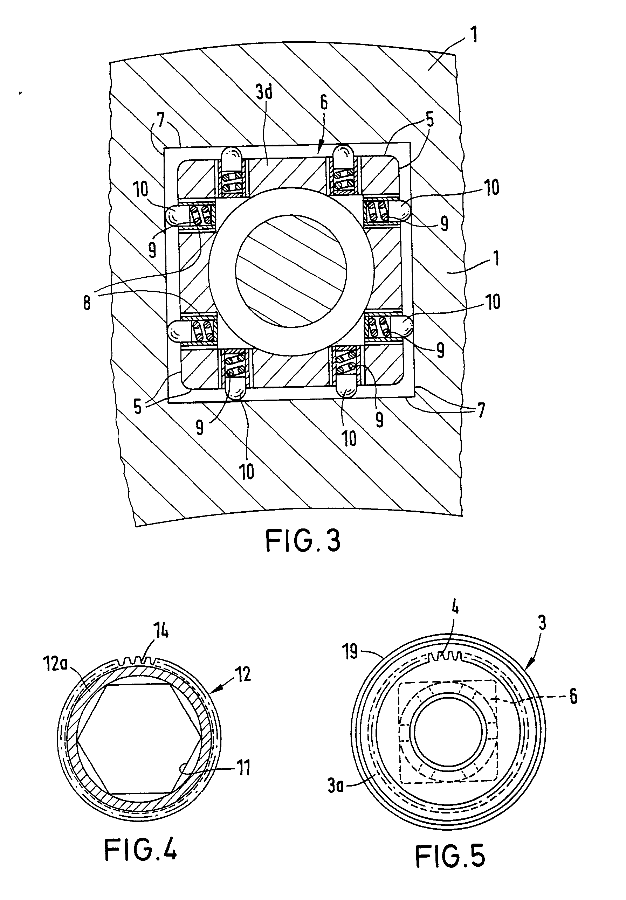

Jeder Mitnehmer 3 hat einen zylindrischen, etwa topfförmigen Unterteil 3a mit einer Innenverzahnung 4, einen zylindrischen Mittelteil 3b und anschließend an einen Bund 3c einen oberen Ansatz 3d von etwa quadratischer Außenform mit den Seitenflächen 5. Der Ansatz 3d geht durch eine von Flächen 7 begrenzte Öffnung 6 im Halter 1 hindurch (vgl. Fig. 3), die ebenfalls eine quadratische Form hat, aber etwas größer als der Ansatz 3d ist, so daß ein kleiner Spalt besteht. Infolgedessen hat der Mitnehmer 3 eine geringe Winkelbeweglichkeit im Sinne einer Drehung in der einen oder anderen Richtung um seine Längsachse L aus der in Fig. 3 gezeigten Ausgangsposition. Eine solche Drehung wird durch die als Anschläge wirkenden Innenflächen 7 begrenzt, gegen die die Eckbereiche der Seitenflächen 5 des Ansatzes 3d zur Anlage kommen können.

Um den Mitnehmer 3 in der Ruhe- oder Ausgangsposition mit Bezug auf die Öffnung 6 zentriert zu halten, sind in Querbohrungen 8 des Ansatzes 3d von Druckfedern 9 belastete Druckstücke 10 vorgesehen, die sich mit ihren abgerundeten Köpfen an den Innenflächen 7 der Öffnung 6 abstützen. In Fig. 3 sind die Druckstücke 10 sämtlich als in gleicher Höher liegend gezeigt. Es kann aber auch eine Anordnung in zwei Ebenen vorgesehen sein, wodurch sich besonders günstige Zentrier- bzw. Rückstellkräfte ergeben.

Mit der Stirnseite des Ansatzes 3d jedes Mitnehmers 3 ist ein Kopfstück 13 lösbar verbunden, z.B. durch Schrauben, das bei runder Form einen größeren Durchmesser als die Öffnung 6 hat, so daß es auf der Oberseite des Halters 1 aufliegt. Dadurch ist der Mitnehmer 3 gewissermaßen am Halter 1 aufgehängt. Der Abstand zwischen dem Kopfstück 13 und dem Bund 3c ist etwas größer als die Dicke des Halters 1, so daß auch eine geringe Beweglichkeit des Mitnehmers 3 relativ zum Halter 1 in axialer Richtung besteht. Es ist aber auch möglich, die Kopfstücke 13 am Halter 1 lösbar zu befestigen.

Mit der Ziffer 12 sind Adapter bezeichnet, die separate Teile für sich bilden, aber mit den Mitnehmern 3 bzw. mit dem Halter 1 gekuppelt werden können. Jeder Adapter 12 hat einen Als Aufsteckkopf 12a ausgebildeten unteren Teil, der den Schüggel angriffsflächen des Bolzens angepaßte Gegenflächen, und bei dem gezeigten Beispiel einen Innensechskant 11 aufweist, welcher dem Außensechskant 21 am oberen Ende jedes Schraubenbolzens 20 entspricht. Haben die Schraubenbolzen eine andere Art oder Anordnung von Schlüsselangriffsflächen, so ist naturgemäß auch die Ausbildung von Gegenflächen an oder in den Adaptern eines entsprechend andere. Es kann z.B. ein Vierkant oder eine längsliche Öffnung vorhanden sein.

Der Aufsteckkopf 12a des Adapters 12 ist ferner mit einer Außenverzahnung 14 versehen, mit der die Innenverzahnung 4 des Mitnehmers 3 zum Eingriff kommen kann. Zweckmäßig sind die Zähne der Außenverzahnung 14 des Adapters 12 und/oder die Zähne der Innenverzahnung 4 des Mitnehmers 3 jeweils an einem Ende angespitzt oder abgeschräft, um ein besonders leichtes Ineinanderschieben zu ermöglichen.

Vom Aufsteckkopf 12a des Adapters 12 geht ein Schaft 12b aus, der sich in der in Fig. 1 gezeigten Gebrauchsposition der Vorrichtung durch den Mitnehmer 3 hindurch erstreckt und ein konisches, mit einer Ringnut 15 versehenes Ende 12c hat. Im Mitnehmer 3 ist eine Führungsbüchse 16 angebracht, insbesondere in Form einer Rollen- oder Wälzkörperanordnung an sich bekannter Art, die sich beim Aufstecken des Mitnehmers 3 auf den Adapter 12 passend auf dessen Schaft 12b schiebt und beide Teile zentriert. Dies wird durch das konische Ende 12c des Schaftes erleichtert.

Am Kopftück 3a des Mitnehmers 3 ist jeweils ein Riegel 17 um einen Zapfen 18 schwenkbar angebracht, derart daß er aus einer Ruheposition (in der linken Hälfte der Fig. 2) zum Eingriff mit der Nut 15 des Schaftes des Adapters 12 und damit in eine Kuppelposition gebracht werden kann, in der der Adapter 12 an den Halter 1 zur Mitnahme durch diesen angeschlossen ist (Fig. 1 und rechte Hälfte von Fig. 2).

Der Teil 3a des Mitnehmers 3 hat am unteren Ende einen zylindrischen Vorsprung 19, dessen Durchmesser geringfügig kleiner ist als der Gewindeinnendurchmesser der Mutter 22, derart, daß er einen Führungsteil für die Mutter bildet, wenn diese sich beim Abschrauben vom Bolzen 20 nach oben bewegt.

Die Handhabung der Vorrichtung geschieht folgendermaßen. Zunächst werden die Adapter 12, die z.B. zur Aufbewahrung und zum Transport in Kassetten untergebracht sind, von Hand einzeln auf die Sechskante 21 der Schraubenbolzen 20 aufgesteckt. Dann wird der Halter 1 mit den beispielsweise ebenfalls von Kassetten aufgenommenen Mitnehmern 3 augesetzt und abgesenkt, wobei die Rollenführung 16 od.dgl. sich auf die Schäfte 12b der Adapter 12 aufschieben und wobei dann auch die Verzahnungen 4 und 14 miteinander zum Eingriff kommen. Dabei ist, wie vorstehend bereits erwähnt, eine geringe Drehung der Mitnehmer 3 relativ zum Halter 1 möglich, wenn die Zahnstellung der Verzahnungen 4 und 14 dies erfordert. Die Winkelbeweglichkeit der Mitnehmer 3 (jeweils Ansatz 3d in der Öffnung 6) braucht nur so groß zu sein, wie die Zahnteilung dies erfordert. Im Endzustand sitzen die Mitnehmer 3 mit einem Teil der inneren Stirnfläche des topfförmigen Unterteils 3a auf der Oberseite des Aufsteckkopfes 12a bzw. einer daran gebildeten Schulter auf, wie dies Fig. 1 erkennen läßt.

In dieser Gebrauchsposition der Vorrichtung sind die Schraubenbolzen 20 durch die über den Halter 1, die Mitnehmer 3 und die Adapter 12 bewirkte gegenseitige Drehmomentabstützung festgehalten und können sich nicht in unerwünschter Weise drehen, wenn die Muttern 22 gelöst werden.

Zum Abnehmen der Vorrichtung werden die Riegel 17 in die Ringnuten 15 an den Schaftenden 12c der Adapter 12 eingeschwenkt (rechter Teil der Fig. 2). Wird jetzt der Halter 1 an den Traggriffen 2 angehoben, so werden die Adapter 12 zusammen mit den übrigen Teilen von den Schraubenbolzen 20 entfernt. Die Muttern 22 können dann ganz abgenommen werden. Die Adapter 12 lassen sich durch Zurückschwenken der Riegel 17 lösen und können einzeln in ihre Aufbewahrungskassette gelegt werden.

Die in der dargestellten Ausführung u.a. für den Einsatz bei schweren Schraubenbolzen geeignete Vorrichtung hat nur ein solches Gewicht, daß sie von einem Mann gehandhabt werden kann. Je nach den Erfordernissen können in einem Halter auch mehr oder weniger als vier Mitnehmer vorgesehen sein, im Mindestfall zwei Mitnehmer.

**Patentansprüche**

1. Vorrichtung zum Verhindern eines unerwünschten Drehens eines an seinem Ende mit Schlüsselangriffsflächen (21) versehenen Schraubenbolzens (20) oder dergleichen, insbesondere für große Schraubenbolzen, mit einem für sich auf das Ende des Schraubenbolzens (20) aufsetzbaren Adapter (12), der den Schlüsselangriffsflächen (21) des Schraubenbolzens (20) angepaßte Gegenflächen (11) sowie eine Außenverzahnung (14) aufweist, und mit einer Hülse Mitnehmer (3), die eine mit der Außenverzahnung (14) des Adapters (12) durch Zusammenschieben beider Teile zum Eingriff bringbare Innenverzahnung (4) hat, gekennzeichnet durch Hülsen (Mitnehmer) (3), die auf den dazugehörigen Adapter (12) auf geschoben sind und durch einen Halter (1), in dem wenigstens zwei Mitnehmer (Hülsen) (3) in einem den Achsabstand der Schraubenbolzen (20) entsprechenden Mittenabstand (A) mit geringer Winkelbeweglichkeit um ihre Längsachse (L) aufgenommen sind.

2. Vorrichtung nach Anspruch 1, dadurch gekennzeichnet, daß der Halter (1) mit vier Mitnehmern (3) versehen ist.

3. Vorrichtung nach Anspruch 1 oder 2, dadurch gekennzeichnet, daß sich die Mitnehmer (3) jeweils mit einem Ansatz (3d) oder dergleichen durch eine Öffnung (6) der Halters (1) hindurch erstrecken und dabei Anschläge (7) zur Begrenzung der Winkelbeweglichkeit vorgesehen sind.

4. Vorrichtung nach Anspruch 3, dadurch gekennzeichnet, daß die Anschläge durch Innenflächen (7) der Öffnung (6) gebildet sind.

5. Vorrichtung nach den Ansprüchen 3 und 4, dadurch gekennzeichnet, daß die Öffnung (6) die Form eines Vielecks hat und der Ansatz (3d) des Mitnehmers (3) eine entsprechende Form mit etwas kleineren Abemessungen hat.

6. Vorrichtung nach einem der Ansprüche 1 bis 5, gekennzeichnet durch elastiche Zentrierelemente (9, 10) für die Position des Mitnehmers (3) relativ zum Halter (1).

7. Vorrichtung nach Anspruch 6, dadurch gekennzeichnet, daß im Mitnehmer (3) federbelastete Druckstücke (10) vorgesehen sind, die an Innenflächen (7) des Halters (1) anliegen.

8. Vorrichtung nach einem der Ansprüche 1 bis 7, dadurch gekennzeichnet, daß an dem Mitnehmern (3) und an den Adaptern (12) Führungsteile (16, 12b) vorgesehen sind.

9. Vorrichtung nach Anspruch 8, dadurch gekennzeichnet, daß die Mitnehmer (3) jeweils mit einer Rollen- oder Wälzkörperanordnung (16) versehen sind.

10. Vorrichtung nach einem der Ansprüche 1 bis 9, gekennzeichnet durch lösbare Kupplungsmittel (15, 17), durch die jeweils die Adapter (12) mit dem Halter (1) zur tragenden Mitnahme durch diesen verbindbar sind.

11. Vorrichtung nach Anspruch 10, dadurch gekennzeichnet, daß am Halter (1) oder an vom Halter getragenen Kopfstücken (13) der Mitnehmer (3) Riegel (17) vorgesehen sind, die jeweils in eine Nut (15) an einem Schaft (12b) des Adapters (12) einschwenkbar sind.

12. Vorrichtung nach einem der Ansprüche 1 bis 11, dadurch gekennzeichnet, daß die Mitnehmer (3) jeweils einen Führungsteil (19) für eine vom Schraubenbolzen (20) abschraubbare Mutter (22) aufweisen.

**Revendications**

1. Dispositif pour empêcher un boulon (20) ou analogue, muni à son extrémité de surfaces de prise (21) pour clé, de tourner intempestivement, dispositif qui est destiné en particulier à des boulons de grandes dimensions et qui comporte un adaptateur (12) agencé en soi de manière à pouvoir être monté sur l'extrémité du boulon (20) et muni de surfaces complémentaires (11) adaptées aux surfaces de prise (21) pour clé du boulon (20) ainsi que d'une denture extérieure (14), et une douille (entraîneur) (3) comportant une denture intérieure (4) agencée de manière à pouvoir venir en prise avec la denture extérieure (14) de l'adaptateur (12) par coulissement mutuel des deux pièces, caractérisé par des douilles (entraîneurs) (3) mises en place par coulissement sur les adaptateurs (12) y appartenant et par un support (1) recevant au moins deux entraîneurs (douilles) (3) qui sont placés à une distance médiane (A) correspondant à l'écartement axial des boulons (20) et qui présentent une faible mobilité en rotation autour de leur axe longitudinal (L).

2. Dispositif selon la revendication 1, caractérisé en ce que le support (1) est muni de quatre entraîneurs (3).

3. Dispositif selon la revendication 1 ou 2, caractérisé en ce que chaque entraîneur (3) s'étend dans une ouverture (6) du support (1) par une saillie (3d) ou analogue et des butées (7) sont prévues pour limiter la mobilité en rotation.

4. Dispositif selon la revendication 3, caractérisé en ce que les butées sont formées par des surfaces intérieures (7) de l'ouverture (6).

5. Dispositif selon les revendications 3 et 4, caractérisé en ce que l'ouverture (6) a la forme d'un polygone et la saillie (3d) de l'entraîneur (3) est de forme complémentaire avec des dimensions un peu plus petites.

7. Dispositif selon l'une des revendications 1 à 5, caractérisé par des éléments de centrage élastiques (9, 10) destinés à positionner l'entraîneur (3) par rapport au support (1).

7. Dispositif selon la revendication 6, caractérisé en ce que, dans l'entraîneur (3), il est prévu des pièces de pression (10) sollicitées élastiquement, qui s'appuient contre les surfaces intérieures (7) du support (1).

8. Dispositif selon l'une des revendications 1 à 7, caractérisé en ce que des éléments de guidage (16, 12b) sont prévus sur les entraîneurs (3) et sur les adaptateurs (12).

9. Dispositif selon la revendication 8, caractérisé en ce que chaque entraîneur (3) est muni d'un moyen (16) à rouleaux ou corps de roulement.

10. Dispositif selon l'une des revendications 1 à 9, caractérisé par des moyens d'accouplement (15, 17) agencés de manière à pouvoir être libérés et par lesquels chaque adaptateur (12) peut être relié au support (1) pour être emporté par ce dernier.

11. Dispositif selon la revendication 10, caractérisé en ce que, sur le support (1) our sur des têtes (13) des entraîneurs (3) portées par le support, il est prévu des verrous (17) agencés chacun de manière à pouvoir être introduits par pivotement dans une rainure (15) pratiquée dans une tige (12b) de l'adaptateur (12).

12. Dispositif selon l'une des revendications 1 à 11, caractérisé en ce que chaque entraîneur (3) comprend un élément (19) destiné au guidage d'un écrou (22) qui est conçu pour pouvoir être retiré du boulon (20) par dévissage.

**Claims**

1. A device for preventing undesired rotation of a screw-bolt (20) or the like, provided at its end with keyed engaging surfaces (21), in particular for large screw-bolts, with an adapter (12) separately mountable onto the end of the screw-bolt (20) and having counter-surfaces (11) matching the keyed engaging surfaces (21) of the screw-bolt (20) as well as an external toothing (14), and with a sleeve (driver) (3) which has an internal toothing (4) which can be brought into engagement with the external toothing (14) of the adapter (12) by pushing together both parts, characterized by sleeves (drivers) (3) which are pushed onto the associated adapters (12) and by a holder (1) in which at least two drivers (sleeves) (3) are accommodated with a small amount of angular play about their longitudinal axis (L) at a centre-to-centre distance (A) corresponding to the axial distance of the screw-bolts (20).

2. A device according to Claim 1, characterized in that the holder (1) is provided with four drivers (3).

3. A device according to Claim 1 or 2, characterized in that the drivers (3) in each case extend with an end portion (3d) or the like through an opening (6) of the holder (1) and stops (7) are provided in order to limit the angular play.

4. A device according to Claim 3, characterized in that the stops are formed by internal surfaces (7) of the opening (6).

5. A device according to Claims 3 and 4, characterized in that the opening (6) has the shape of a polygon and the end portion (3d) of the driver (3) has a corresponding shape with slightly smaller dimensions.

6. A device according to one of Claims 1 to 5, characterized by elastic centring elements (9, 10) for the position of the driver (3) relative to the holder (1).

7. A device according to Claim 6, characterized in that spring-loaded pressure pieces (10) are provided in the driver (3) and abut against internal surfaces (7) of the holder (1).

8. A device according to one of Claims 1 to 7, characterized in that guiding parts (16, 12b) are provided on the drivers (3) and on the adapters (12).

9. A device according to Claim 8, characterized in that the drivers (3) in each case are provided with a roller or rolling body arrangement (16).

10. A device according to one of Claims 1 to 9, characterized by detachable coupling means (15, 17), by means of which the adapters (12) in each case can be connected to the holder (1) so as to be supportingly driven by the latter.

11. A device according to Claim 10, characterized in that catches (17) are provided on the holder (1) or on top pieces (13) of the drivers (3), supported by the holder, and can be pivoted in each case into a groove (15) on a shaft (12b) of the adapter (12).

12. A device according to one of Claims 1 to 11, characterized in that the drivers (3) in each case have a guiding part (19) for a nut (22) which can be unscrewed from the screw-bolt (20).

FIG.1

EP 0 225 622 B1

FIG.2

FIG. 3

FIG.4

FIG.5